# EUROPEAN PATENT SPECIFICATION

(11) **EP 3 115 492 B1**
(45) Date of publication and mention of the grant of the patent: **18.07.2018**
(21) Application number: 15886722.6
(22) Date of filing: 27.10.2015
(51) Int. Cl.: D04H 1/492, D04H 1/4342, D03D 15/00, D03D 1/00, D04H 1/498, B32B 5/02, B32B 5/06, B32B 5/26, F41H 5/04

(54) **METHOD FOR MANUFACTURING STAB-RESISTANT FABRIC USING WATER PUNCHING**
VERFAHREN ZUR HERSTELLUNG EINES STICHFESTEN STOFFES MITTELS WASERSTANZEN
PROCÉDÉ POUR FABRIQUER UN TISSU RÉSISTANT AUX COUPS DE COUTEAU À L'AIDE DE POINÇONNAGE HYDRAULIQUE

(30) Priority: 02.04.2015 KR 20150046625
(43) Date of publication of application: 11.01.2017
(73) Proprietor: Welcron Co., Ltd., Seoul 08381 (KR)
(72) Inventor: RHEE, Young Kyu, Seoul 08381 (KR); LEE, Kyung Ju, Seoul 08381 (KR); LEE, Chang Hwan, Seoul 08381 (KR); HONG, Hu Fan, Seoul 08381 (KR); LEE, Nan Sae, Seoul 08381 (KR)
(74) Representative: Beck & Rössig European Patent Attorneys
(86) International application number: PCT/KR2015/011343
(87) International publication number: WO 2016/159470

(56) References cited:
- KR-A- 20090 110 031
- KR-A- 20100 035 293
- KR-A- 20110 073 854
- KR-B1- 101 246 657
- US-A- 5 468 537
- US-A1- 2004 132 368
- US-A1- 2009 282 596
- US-A1- 2011 312 238
- US-A1- 2014 206 248

## Description

The present invention relates to stab-resistant fabric, and more particularly, to a method of manufacturing stab-resistant fabric using water punching as defined by the preamble portion of claim 1.

In developing a stab-resistant vest (including stab-proof clothing, stab-proof gloves, or the like) or stab-resistant fabric for effectively protecting bodies or the like from impact of a sharp object such as a knife or awl, existing stab-resistant vest (stab-resistant fabric) is heavy in weight and stiff in texture, which are not desirable for activities.

This is because when a stab-resistant vest is manufactured, a multilayer stab-resistant material is stacked such that a knife or an awl cannot penetrate therethrough, and a thin metal plate or high-strength plastic and fabric coated with inorganic particles, and the like are used. Such a stab-resistant vest is inevitably heavy and stiff, causing a wearer to slow in movement.

Thus, as a method for improving such a stab-resistant vest (or stab-resistant clothing), a demand for developing stab-resistant fabric, having the greatest importance in stab-resistant vest, to develop a product which is light in overall weight and supports excellent activity has grown.

In order to manufacture a stab-resistant vest supporting excellent activity, KR 101385003 B1 proposes a method of increasing flexibility of fabric by attaching inorganic particles such as alumina, titanium dioxide, or silicon carbide to aramid fiber formed of yarn with high tenacity or treating a manufactured stab-resistance fabric with a softening agent.

The stab-resistant fabric manufactured by the above method is reduced in weight and has increased flexibility, compared with an existing stab-resistant fabric, but disadvantageously has a short endurance term in that the inorganic particles attached to the surface of the fabric may be separated.

Thus, it is required to develop fabric itself having excellent stab-resistance performance.

A method as defined by the preamble portion of claim 1 is equally known from US 2011/0312238A1 and US 2004/0132368 A1.

US 2011/0312238A1 discloses a fabric comprising at least one woven layer and at least one nonwoven layer, wherein the number ratio between the at least one woven layer and the at least one nonwoven layer is in the range of 0.1 to 1. The resulting fabric is said to be useful in the manufacture of ballistic vests, hard and soft armor, stab and knife protection systems, and anti-ballistic systems by reducing the likelihood of ricochets.

US 2004/0132368 A1 discloses energy absorbing materials comprising at least one woven layer of ballistic grade fiber (preferably a stack of such layers) and at least one nonwoven layer of fabric which is entangled with the woven or unidirectional layer by needle felting. The resulting core material does not require assembly of individual woven layers during subsequent manufacture of ballistic articles and is said to exhibit excellent ballistic performance at low areal densities and thicknesses.

The object of the present invention to provide stab-resistant fabric which is light in overall weight compared with an existing stab-resistant vest by enhancing stab-resistance performance of fabric itself.

This object is achieved by a method of manufacturing stab-resistant fabric as defined by claim 1. Advantageous embodiments are indicated in further claims.

The present inventors recognized that the stab-resistance performance can be increased by enhancing the density of stab-resistant fabric by interlacing a micro-aramid fiber (aggregate) constituting an aramid nonwoven fabric in a high strength fabric formed of aramid yarn through a water punching process using high pressure water.

### High Strength Aramid Fabric

High strength fabric as biaxial fiber aggregate is formed using high strength aramid nonwoven fabric or filament yarn as uniaxial fiber aggregate. Fiber is preferably fabric, and twilled fabric or plain fabric is illustrated. In order to achieve a stab-resistance function, the density of fiber should be high, and knitted work has relatively low density compared with fabric, and thus, plain fabric or twilled fabric is selected.

Further, in the present invention, the aramid yarn is preferably spun yarn 40/3 (tex 40/strands 3) to 60/2 or 500 to 600 denier filament yarn, and this is for appropriate fabric density and integration of yarn in fabric.

Also, in the present invention, the density of the fiber is 30 x 30 ply (wrap threads x weft threads) to 85 x 85 ply (wrap threads X weft threads)/5 cm, a basic weight is 100 to 200 gsm, and air permeability is 5cm³/cm²/s or greater. When the density is less than 30 x 30 ply/5cm, stab-resistance performance is weak, and when the density exceeds 85 x 85 ply/cm, there is a difficulty in weaving fabric. It is preferable to have 60/2, 85 x 75 ply/5cm, and 140 gsm. Also, if the air permeability of the fabric is less than 5cm³/cm²/s, a suction function within a roller is impossible to perform, making interlacing between aramid fabric and nonwoven fabric defective or making it impossible to interlace aramid fiber and nonwoven fabric.

### Aramid Nonwoven Fabric

Nonwoven fabric manufactured by entwisting aramid web using spunlace through a non-adhesive water jet stream or collecting aramid web in a conveyer belt and then needle-punching it is appropriate. The nonwoven fabric formed of aramid fiber having fineness of 3 to 6 denier, and having a basic weight of 40 to 70 gsm and air permeability of 100cm³/cm²/s or greater is illustrated. The range of the above numerical values is selected in consideration of penetration of nonwoven fiber into aramid fiber.

### Water Punching Process

The present invention features that, in a state where aramid nonwoven fabric is positioned on aramid fabric, a high pressure fluid is jetted from the nonwoven fabric toward the aramid fabric to allow the nonwoven fabric to be interlaced to be combined between the fiber of the aramid fabric. Here, the combining of the aramid fabric and the nonwoven fabric is performed through water punching without using a separate adhesive, and the aramid fabric and the nonwoven fabric are combined to form integrated fabric.

Water punching is a method of allowing fiber to continuously pass with high pressure water to increase the density of fiber and a combining force between fibers, and as the strength (water pressure) of water punching is increased, the rigidity of aramid fabric is increased and the interlacing between nonwoven fabric and fiber is increased.

In the present invention, the water pressure of water punching may be 50 to 250 bar. When water punching is continuously performed with water pressure of 50 to 250 bar, a water punching pattern may appear on a surface of the fabric. Such stripe pattern may be removed through random vibration. If the pressure is less than 50 bar, inter-fiber combining is not normally made to degrade strength and the fibers may be easily separated, and if the pressure is greater than 250 bar, good performance may be obtained but elongation is lowered to reduce flexibility. At an initial stage, the fabric may be water-punched with low water pressure to restrain damage to the fabric, and the fabric may be water-punched with high water pressure during a main water punching process to allow the fibers to be effectively interlaced and allow a portion of aramid nonwoven fabric to push into the surface of the aramid fabric so as to be combined in a wedge form, thus manufacturing stab-resistant fabric having strong combining force.

In case of a multistage water punching process greater than one stage, how strong water pressure is to be applied by stages may be determined by a person skilled in the art as necessary.

In the present invention, water punching may move the fabric at a speed of 3 m/min or higher, preferably, at a speed of 3 to 10 m/min. If the moving speed of the fabric is too high, interlacing may be defective, and if the moving speed thereof is too low, mass-production of the fabric manufacturing process is degraded.

When the composite aramid fabric manufactured in the present invention is not properly dried, stab-resistance performance may be degraded, and thus, it is preferred that the fabric undergoes a dry process at a temperature of about 240°C for 60 seconds after the water punching process.

The above and other objects and features of the present invention will become apparent from the following description of embodiments, given in conjunction with the accompanying drawings, in which:

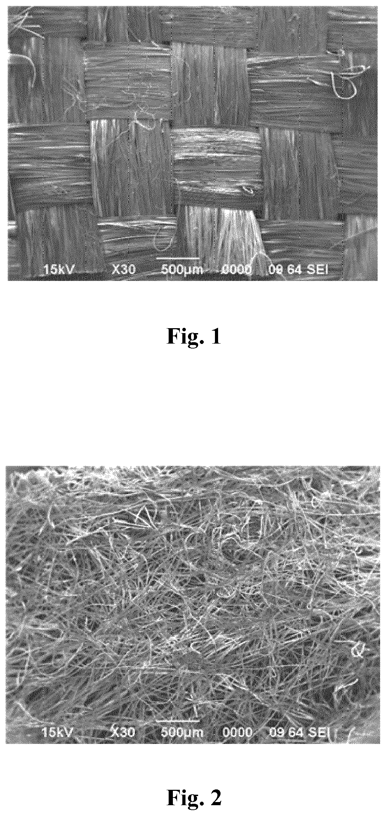

Fig. 1 is a surface-enlarged photograph of general aramid fabric.
Fig. 2 is a surface-enlarged photograph of general aramid nonwoven fabric.
Fig. 3 is a conceptual view of a water punching apparatus for manufacturing composite aramid fabric according to an embodiment of the present invention;

Hereinafter, an embodiment of the present invention will be described.

### Embodiment 1

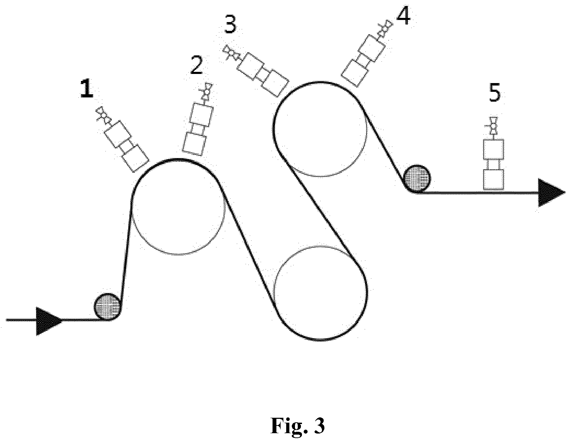

Aramid fabric (plain fabric) having 60/2, 85x75 ply/5cm and basic weight of 140 gsm using Kevlar of DuPont as yarn and Heracron nonwoven fabric (40 gsm) of Kolon as reinforced fabric were prepared. In Fig. 3, preliminary interlacing was performed with pressure of 70 bar by nozzle #1 of a water punching device. Secondary interlacing was performed respectively with pressure of 100 bar by nozzle #2 and with pressure of 110 bar by nozzle #3 through a subsequent continuous process. Main interlacing was performed with pressure of 250 bar by nozzle #4.

In addition, stripe patterns formed at predetermined intervals were removed with pressure of 100 bar and through random vibration by nozzle #5. The interlaced aramid fabric was dried at a dry temperature of 240°C for 60 seconds and wound to obtain stab-resistant fabric having a basic weight of 180 g/m².

### Comparative Example 1

Aramid fabric (plain fabric) having 60/2, 85 x 75 ply/5cm and a basic weight of 140 gsm using Kevlar of DuPont as yarn was prepared.

Stab-resistance performances of the fabric of Embodiment 1 of the present invention and the fabric of Comparative Example 1 prepared above were tested based on NIJ Standard 0115.00 (E1).

**[Table 1]**

| | Total weight (g/m²) | Basic weight (g/m²) | Stab-resistance performance (mm) |
|---|---|---|---|
| Embodiment 1 | 3600 | 180 | 2 |
| Comparative Example 1 | 3780 | 140 | 5 |

The comparison between Embodiment 1 and Comparative Example 1 shows that the stab-resistance performance of the composite aramid fabric using water punching according to the present invention is superior, although it is light in weight, compared with otherwise fabric.

According to the present invention described above, stab-resistant fabric capable of effectively protecting it from impact of a sharp object such as a knife or awl is provided. Further, the present invention can also be used in manufacturing a stab-resistant vest or the like supporting excellent activity through lightness.

## Claims

1. A method of manufacturing stab-resistant fabric using water punching, comprising:
interlacing an aramid nonwoven fabric in a high strength fabric formed of aramid yarn through water punching
**characterized in that**
the density of the fabric is 30 x 30 ply (wrap threads x weft threads) to 85 x 85 ply (wrap threads x weft threads)/5 cm, a basic weight is 100 to 200 gsm, and air permeability is 5cm³/cm²/s or greater;
the nonwoven fabric is formed of aramid fiber having fineness of 3 to 6 denier, and has a basic weight of 40 to 70 gsm and air permeability of 100cm³/cm²/s or greater; and
the water punching is performed with water pressure of 50 to 250 bar.

2. The method of claim 1, wherein a tissue of the high strength fabric is a tissue selected from plain fabric and twilled fabric.

3. The method of claim 1, wherein the aramid yarn is spun yarn 40/3 (tex 40/strands 3) to 60/2 or 500 to 600 denier filament yarn.

## Patentansprüche

1. Verfahren zur Herstellung eines stichsicheren Gewebes unter Verwendung von Wasserdruckvernadeln, umfassend:
Verflechten eines Aramid-Vliesstoffes mit einem hochfesten Gewebe aus Aramidgarn durch Wasserdruckvernadeln,
**dadurch gekennzeichnet, dass**
die Dichte des Gewebes eine Kettdichte von 30 x 30 ply (Kettfäden x Schussfäden) bis 85 x 85 ply (Kettfäden x Schussfäden)/5 cm aufweist, ein Grundgewicht 100 bis 200 gsm beträgt, und die Luftdurchlässigkeit 5 cm³/cm²/s oder mehr beträgt;
der Vliesstoff aus Aramidfasern mit einer Feinheit von 3 bis 6 Denier gebildet ist und ein Grundgewicht von 40 bis 70 gsm sowie eine Luftdurchlässigkeit von 100 cm³/cm²/s oder mehr aufweist; und
das Wasserdruckvernadeln mit einem Wasserdruck von 50 bis 250 bar durchgeführt wird.

2. Verfahren nach Anspruch 1, wobei ein Gewebe des hochfesten Stoffes ein Gewebe ist, das aus einem flachen Gewebe und einem Twillgewebe ausgewählt wird.

3. Verfahren nach Anspruch 1, wobei das Aramidgarn ein gesponnenes 40/3-Garn (40 Tex/3 Einzelfäden) bis 60/2 oder 500 bis 600 Denier Filamentgarn ist.

## Revendications

1. Procédé de fabrication d'un tissu résistant aux coups de couteau utilisant un poinçonnage hydraulique comprenant :
un entrelacement de tissu non-tissé en aramide dans un tissu de haute résistance formé en fil d'aramide par poinçonnage hydraulique,
**caractérisé en ce que**
la densité du tissu est de 30 x 30 plis (fils d'enroulement x fils de trame) à 85 x 85 plis (fils d'enroulement x fils de trame)/ 5 cm, un poids de base de 100 à 200 g/m² et une perméabilité à l'air de 5 cm³/cm²/s ou plus,
le tissu non-tissé est formé en fibres d'aramide ayant une finesse de 3 à 6 deniers et un poids de base de 40 à 70 g/m² et une perméabilité à l'air de 100 cm³/cm²/s ou plus et
le poinçonnage hydraulique étant réalisé avec une pression d'eau de 50 à 250 bar.

2. Procédé selon la revendication 1, un tissu de tissue de haute résistance étant un tissu sélectionné parmi les tissus tissés simples et les tissus tissés croisés.

3. Procédé selon la revendication 1, le fil d'aramide étant du fil à âme 40/3 (tex40/3 brins) à 60/2 ou du fil de 500 à 600 filaments.
